# EUROPEAN PATENT APPLICATION

(11) **EP 4 307 029 A1**
(43) Date of publication of application: **17.01.2024**
(21) Application number: 21929574.8
(22) Date of filing: 11.03.2021
(51) Int. Cl.: G02B 27/01

(54) **HUD SYSTEM, VEHICLE, AND VIRTUAL IMAGE POSITION ADJUSTMENT METHOD**

(71) Applicant: Huawei Technologies Co., Ltd., Longgang Shenzhen, Guangdong 518129 (CN)
(72) Inventor: LIN, Jun Han, Shenzhen, Guangdong 518129 (CN)
(74) Representative: Thun, Clemens
(86) International application number: PCT/CN2021/080216
(87) International publication number: WO 2022/188096

(57) **Abstract**

A head-up display HUD system, a vehicle, and a virtual-image position adjustment method may be applied to the intelligent driving field and the like, so as to resolve a problem that a current HUD system has a large volume. The HUD system may include a PGU, a first reflection assembly, and a second reflection assembly. The PGU is configured to emit a first light ray to the first reflection assembly, and emit a second light ray to the second reflection assembly; the first reflection assembly is configured to perform optical path folding on the received first light ray, and reflect a first light ray obtained after the optical path folding to the second reflection assembly; and the second reflection assembly is configured to separately reflect the received first light ray obtained after the optical path folding and the received second light ray to a windshield, where the first light ray obtained after the optical path folding forms a first virtual image at a first position by using the windshield, and the second light ray forms a second virtual image at a second position by using the windshield. In this way, the first virtual image and the second virtual image can be formed at two different positions, so that the HUD system can display two virtual images at different virtual image distances, that is, the HUD system can implement dual-screen display.

## Description

### TECHNICAL FIELD

This application relates to the field of HUD technologies, and in particular, to a HUD system, a vehicle, and a virtual-image position adjustment method.

### BACKGROUND

With continuous development of vehicle technologies, increasingly high requirements are imposed on convenience and safety in use of vehicles. For example, a head-up display (head-up display, HUD) (or referred to as a head-up display system) is widely used in vehicles. The head-up display is an apparatus for projecting meter information (such as a vehicle speed, a rotation speed, a temperature, an amount of fuel, and the like), navigation information, and the like to the front of a field of view of a driver. The driver can see the meter information and the navigation information in the front of the field of view, and does not need to observe a dashboard or a central control display below a steering wheel, so that a braking response time in an emergency case can be improved, and driving security can be improved.

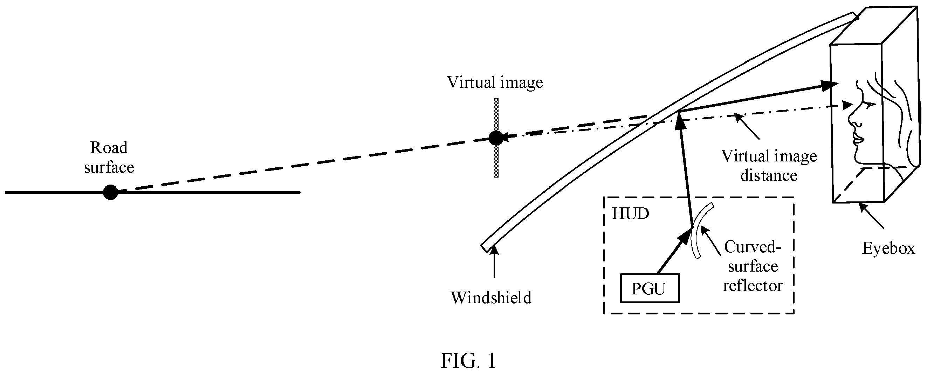

For an imaging principle of a HUD system, refer to FIG. 1: An image is generated by a picture generation unit (picture generation unit, PGU) in the HUD system by using meter information, navigation information, or the like. Then, after an optical depth of field and a magnification ratio are increased by using a curved-surface reflector, the image is projected to a windshield and a virtual image with a depth of field is formed in front of a vehicle.

To display the meter information and the navigation information at the same time, and to ensure that the two pieces of displayed information do not interfere with each other, the HUD system needs to generate images on two different focal planes. Currently, a mainstream solution uses dual-laser beam scanning (laser beam scanning, LBS), so that the HUD system generates an image with two different focal planes. However, designing two LBSs increases a volume of the HUD system.

### SUMMARY

This application provides a HUD system, a vehicle, and a virtual-image position adjustment method to reduce a volume of a HUD system.

According to a first aspect, this application provides a HUD system. The HUD system may include a PGU, a first reflection assembly, and a second reflection assembly. The PGU may be configured to emit a first light ray to the first reflection assembly, and emit a second light ray to the second reflection assembly; the first reflection assembly is configured to perform optical path folding on the received first light ray, and reflect a first light ray obtained after the optical path folding to the second reflection assembly; and the second reflection assembly is configured to separately reflect the received first light ray obtained after the optical path folding and the received second light ray to a windshield, where the first light ray obtained after the optical path folding forms a first virtual image at a first position by using the windshield, and the second light ray forms a second virtual image at a second position by using the windshield.

Herein, the first position and the second position are two different positions.

Based on the foregoing HUD system, an optical path of the first light ray can be folded by using the first reflection assembly, thereby increasing an optical path length of the first light ray. In this way, the first virtual image and the second virtual image can be formed at two different positions, so that the HUD system can display two virtual images at different virtual image distances. In other words, based on the foregoing HUD system, the HUD system can be enabled to implement dual-focal-plane display.

In a possible implementation, an optical path length of the first light ray obtained after the optical path folding is greater than an optical path length of the second light ray.

In a possible implementation, the first reflection assembly includes N first reflection elements, and N is a positive integer.

When N is equal to 1, the first reflection assembly receives the first light ray from the PGU, and reflects the first light ray to the second reflection assembly.

When N is greater than 1, a first reflection element nearest to the PGU is configured to receive the first light ray from the PGU, and reflect the first light ray to a first reflection element disposed opposite to the first reflection element nearest to the PGU; and a first reflection element nearest to the second reflection assembly is configured to reflect the first light ray obtained after the optical path folding to the second reflection assembly.

In a possible implementation, the first reflection element includes a first planar reflector.

By using the first planar reflector, the optical path of the received first light ray can be folded. In addition, a preparation process of the first planar reflector is simple, and an optical path design is also simple, thereby helping simplify an imaging optical path design of a HUD and reducing costs of the HUD system.

In a possible implementation, the second reflection assembly includes M second reflection elements, and M is a positive integer.

When M is equal to 1, the second reflection element is configured to receive the first light ray obtained after the optical path folding from the first reflection assembly, and reflect the first light ray obtained after the optical path folding to the windshield. The second reflection element is further configured to receive the second light ray from the PGU, and reflect the second light ray to the windshield.

When M is greater than 1, a second reflection element nearest to the first reflection assembly is configured to receive the first light ray obtained after the optical path folding from the first reflection assembly, and reflect the first light ray obtained after the optical path folding to a second reflection element disposed opposite to the second reflection element nearest to the first reflection assembly; and a second reflection element nearest to the windshield is configured to reflect the first light ray obtained after the optical path folding to the windshield. The second reflection element nearest to the first reflection assembly is further configured to receive the second light ray from the PGU, and reflect the second light ray to the second reflection element disposed opposite to the second reflection element nearest to the first reflection assembly; and the second reflection element nearest to the windshield is further configured to reflect the second light ray to the windshield.

In a possible implementation, the second reflection element includes a second curved-surface reflector.

By using the second curved-surface reflector, in one aspect, both the received first light ray obtained after the optical path folding and the received second light ray can be propagated to the windshield; and in another aspect, an image corresponding to the first light ray obtained after the optical path folding and an image corresponding to the second light ray can be zoomed in.

In a possible implementation, the PGU includes a display, and the display includes a first area and a second area; the first area of the display is configured to emit the first light ray; and the second area of the display is configured to emit the second light ray.

The display with area division helps reduce interference between the first light ray and the second light ray.

In a possible implementation, image information carried by the first light ray is the same as image information carried by the second light ray.

With the image information carried by the first light ray being the same as the image information carried by the second light ray, same virtual images can be formed at two different positions, so that a visual effect of dynamic zooming can be generated.

In a possible implementation, the first light ray carries navigation image information, and the second light ray carries meter image information.

Based on this, navigation information and meter information can be displayed at two different positions.

In a possible implementation, the PGU includes an LBS.

Using the LBS as the PGU helps implement a large field of view (field of view, FOV) and a large virtual image distance of the HUD system.

In a possible implementation, the first reflection element nearest to the second reflection assembly further includes a first rotating shaft, which is configured to adjust a position of the first virtual image in a direction perpendicular to a first virtual image distance.

By using the first rotating shaft, the position of the first virtual image in the direction perpendicular to the first virtual image distance can be adjusted, that is, an upper/lower position of a first image corresponding to the first virtual image in a case that the first image is formed in human eyes can be adjusted.

In a possible implementation, the second reflection element nearest to the windshield further includes a second rotating shaft, which is configured to adjust the position of the first virtual image in the direction perpendicular to the first virtual image distance, and/or is configured to adjust a position of the second virtual image in a direction perpendicular to a second virtual image distance.

By using the second rotating shaft, the position of the first virtual image in the direction perpendicular to the first virtual image distance can be adjusted, that is, the upper/lower position of the first image corresponding to the first virtual image in a case that the first image is formed in the human eyes can be adjusted; and/or the position of the second virtual image in the direction perpendicular to the second virtual image distance can be adjusted, that is, an upper/lower position of a second image corresponding to the second virtual image in a case that the second image is formed in the human eyes can be adjusted.

According to a second aspect, this application provides a vehicle, including any HUD system in the first aspect or the first aspect and a windshield. The windshield is configured to reflect the first light ray obtained after the optical path folding from the HUD system to an eyebox to form a first image corresponding to the first virtual image, and reflect the second light ray from the HUD system to the eyebox to form a second image corresponding to the second virtual image, and the eyebox is an area in which driver's eyes are located.

For technical effects that can be achieved by the second aspect, refer to descriptions of beneficial effects in the first aspect. Details are not described herein again.

According to a third aspect, this application provides a virtual-image position adjustment method. The method may include: obtaining a first image and a second image that are generated by a PGU; separately obtaining a first virtual image distance corresponding to the first image and a second virtual image distance corresponding to the second image; and adjusting a position of the PGU and/or positions of N first reflection elements based on the first virtual image distance and the second virtual image distance to adjust a first virtual image corresponding to the first image to a first position and adjust a second virtual image corresponding to the second image to a second position.

The method may be applied to a head-up display HUD system. The HUD system includes the PGU and the N first reflection elements, and N is a positive integer.

Further, optionally, the HUD system may be any HUD system in the first aspect or the first aspect.

In a possible implementation, at least one of the N first reflection assemblies includes a first rotating shaft; and the first rotating shaft of the first reflection element may be adjusted to change a position of the first virtual image in a direction perpendicular to the first virtual image distance.

In a possible implementation, the first reflection element includes a first planar reflector.

For technical effects that can be achieved by any aspect of the second aspect, refer to descriptions of beneficial effects in the first aspect. Details are not described herein again.

### BRIEF DESCRIPTION OF DRAWINGS

FIG. 1 is a schematic diagram of an imaging principle of a HUD system according to this application;
FIG. 2 is a schematic diagram of a possible application scenario according to this application;
FIG. 3a is a schematic diagram of an architecture of a HUD system used to form virtual images at two different positions in a conventional technology;
FIG. 3b is a schematic diagram of a structure of an LBS according to this application;
FIG. 4 is a schematic diagram of a structure of a HUD system according to this application;
FIG. 5a is a schematic diagram of a structure of a display according to this application;
FIG. 5b is a schematic diagram of a structure of another display according to this application;
FIG. 6 is a schematic diagram of a structure of a first reflection assembly according to this application;
FIG. 7 is a schematic diagram of a structure of a second reflection assembly according to this application;
FIG. 8a is a schematic diagram of a structure of another HUD system according to this application;
FIG. 8b is a schematic diagram of a structure of still another HUD system according to this application;
FIG. 8c is a schematic diagram of a structure of still another HUD system according to this application;
FIG. 9 is a simplified schematic diagram of a partial structure of a vehicle according to this application; and
FIG. 10 is a schematic diagram of a structure of a windshield according to this application.

### DESCRIPTION OF EMBODIMENTS

The following describes embodiments of this application in detail with reference to accompanying drawings.

Some terms in this application are described below. It should be noted that these explanations are for ease of understanding by a person skilled in the art, and are not intended to limit the protection scope claimed by this application.

### (1) Eyebox (eyebox)

An eyebox is generally a range in which a driver's eyes can see a whole displayed image. For details, refer to FIG. 1. To adapt to a height difference between drivers, a size of the eyebox is usually 130 mm × 50 mm. To be specific, the driver's eyes have a moving range of about ±50 mm in a vertical direction and a moving range of about ±130 mm in a horizontal direction. If the driver's eyes are within a range of the eyebox, the driver can see a complete and clear image. If the driver's eyes are out of the range of the eyebox, the driver may see an image distortion, a color rendering error, or the like, and even cannot see an image.

### (2) Virtual image distance (virtual image distance, VID)

The virtual image distance is a distance between a center of an eyebox (eyebox) and a center of a virtual image. For details, refer to FIG. 1. In this application, a first virtual image distance is a distance between the center of the eyebox and a center of a first virtual image, and a second virtual image distance is a distance between the center of the eyebox and a second virtual image.

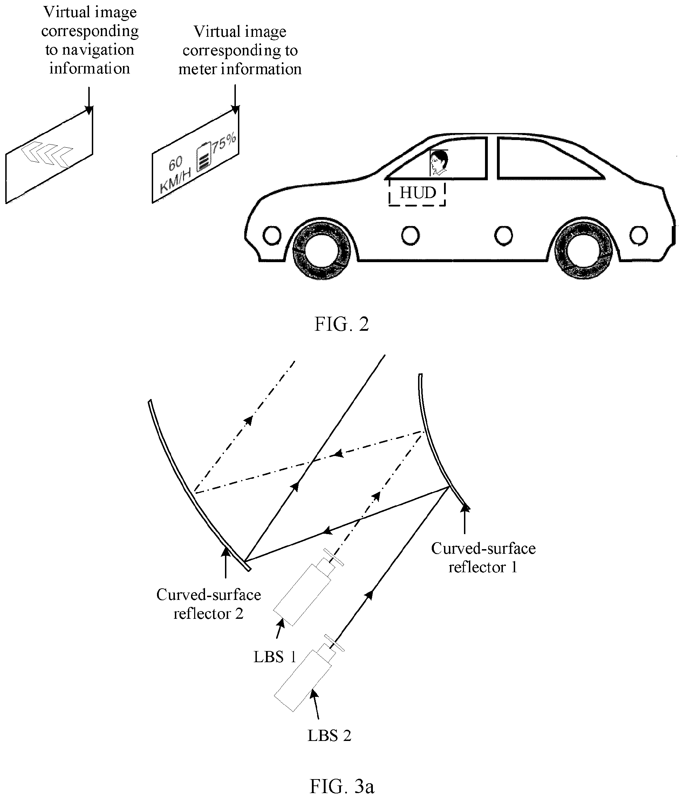

Based on the foregoing content, FIG. 2 shows a possible application scenario according to this application. The application scenario is an example in which a HUD system is applied to a vehicle. The HUD system is configured to project meter information (a vehicle speed, a temperature, an amount of fuel, and the like), navigation information, and the like of the vehicle into a range of a field of view of a driver by using a windshield of the vehicle. A virtual image corresponding to the navigation information may be overlaid onto a real environment outside the vehicle, so that the driver can obtain a visual effect of augmented reality. For example, the virtual image corresponding to the navigation information may be used for AR navigation, adaptive cruise, lane deviation warning, and the like. Because the virtual image corresponding to the navigation information needs to be combined with a real scene, the vehicle needs to have a precise positioning and detection function. Usually, the HUD system needs to cooperate with an advanced driving assistant system (advanced driving assistant system, ADAS) system of an automobile. To avoid interference with a road condition, a virtual image distance of a virtual image corresponding to the meter information is usually about 2 meters to 3 meters. For better combination of the virtual image corresponding to the navigation information with a real road surface, a virtual image distance of the virtual image corresponding to the navigation information is usually about 7 meters to 15 meters.

It should be understood that, the foregoing scenario is merely an example. The HUD system provided in this application may be further applied to another scenario, for example, may be further applied to an aircraft (such as a warcraft) and the like. A pilot of a warcraft may track and target an object based on the HUD system, and this helps improve a success rate and flexibility of an operation.

For the virtual image corresponding to the meter information and the virtual image corresponding to the navigation information to be respectively formed at different positions, currently, a HUD usually uses two LBSs. FIG. 3a is a schematic diagram of an architecture of a HUD system used to form virtual images at two different positions in a conventional technology. The HUD may include an LBS 1, an LBS 2, a curved-surface reflector 1, and a curved-surface reflector 2. To form two virtual images at different virtual image distances, the LBS 1 and the LBS 2 need to be placed at specified positions. The specified positions at which the LBS 1 and the LBS 2 need to be placed are determined based on the virtual image distances of the two virtual images that need to be formed.

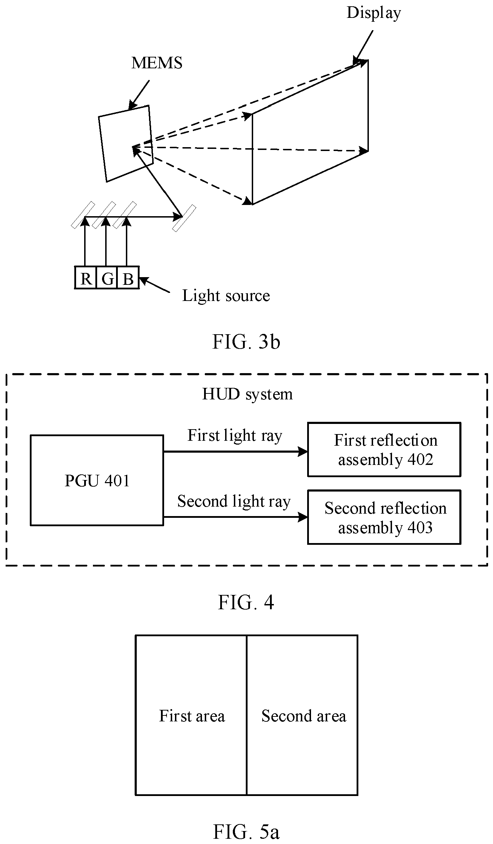

FIG. 3b is a schematic diagram of a structure of an LBS according to this application. The LBS may include a light source, a micro-electromechanical system (micro-electromechanical system, MEMS), a reflector, and a display (or referred to as a diffuser). The light source may be 3 to 6 pixels, such as a red (red, R) pixel, a green (green, G) pixel, and a blue (blue, B) pixel. The reflector is configured to reflect a light beam from the light source to the MEMS. The MEMS is configured to adjust a propagating optical path of the light beam from the light source, to project the light beam onto the display. By controlling a deflection of the MEMS, the light beam can be scanned in space, so as to form an image on the display.

When the HUD system includes two LBSs, a large space needs to be occupied, resulting in a large volume of the HUD system. As a result, an application scenario of the HUD system is limited. A miniaturized HUD system is needed, especially when the HUD system is applied to a space-limited scenario such as a vehicle and the like.

In view of the foregoing problem, this application provides a HUD system. By using one LBS, the HUD system may be enabled to display at least two virtual images at different virtual image distances, thereby facilitating miniaturization of the HUD system.

With reference to FIG. 4 to FIG. 8c, the following describes in detail the HUD system provided in this application.

Based on the foregoing content, FIG. 4 is a schematic diagram of a structure of a HUD system according to this application. The HUD system may include a PGU 401, a first reflection assembly 402, and a second reflection assembly 403. The PGU 401 is configured to emit a first light ray to the first reflection assembly 402, and emit a second light ray to the second reflection assembly 403; the first reflection assembly 402 is configured to perform optical path folding on the received first light ray, and reflect a first light ray obtained after the optical path folding to the second reflection assembly 403; and the second reflection assembly 403 is configured to separately reflect the received first light ray obtained after the optical path folding and the received second light ray to a windshield, where the first light ray obtained after the optical path folding forms a first virtual image at a first position by using the windshield, and the second light ray forms a second virtual image at a second position by using the windshield.

Herein, the first position and the second position are two different positions. That the first light ray obtained after the optical path folding forms a first virtual image at a first position by using the windshield may be understood as follows: the first light ray obtained after the optical path folding forms the first virtual image at the first position on a reverse extension line of the first light ray after being reflected by the windshield. That the second light ray forms a second virtual image at a second position by using the windshield may be understood as follows: the second light ray forms the second virtual image at the second position on a reverse extension line of the second light ray after being reflected by the windshield.

Based on the foregoing HUD system, an optical path of the first light ray can be folded by using the first reflection assembly, thereby increasing an optical path length of the first light ray. In this way, the first virtual image and the second virtual image can be formed at two different positions, so that the HUD system can display two virtual images at different virtual image distances. In other words, based on the foregoing HUD system, the HUD system can be enabled to implement dual-screen display. Moreover, using a single PGU helps simplify assembly efficiency of the HUD system and improve reliability of the HUD system.

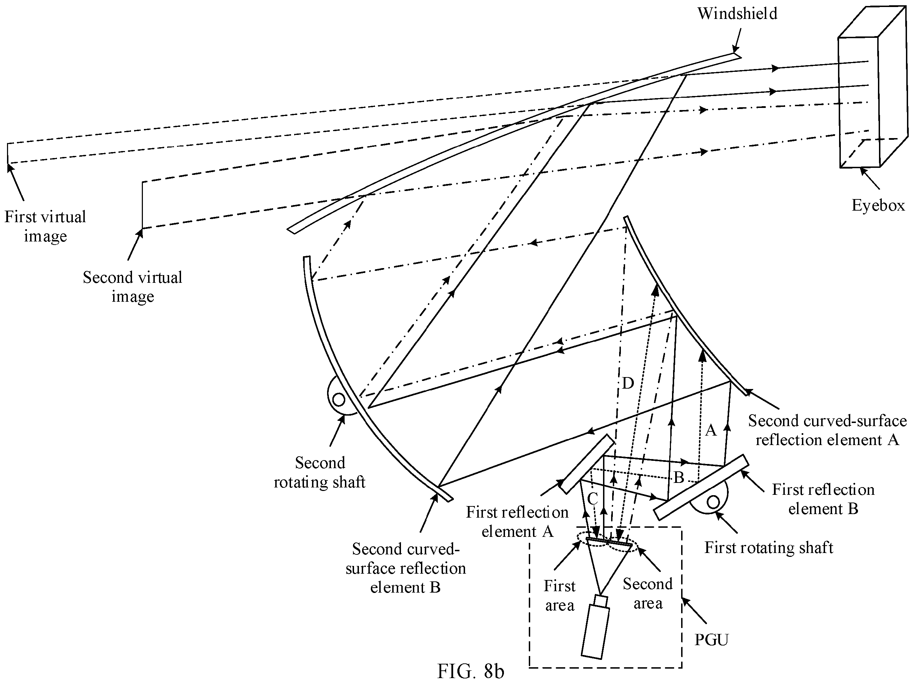

In a possible implementation, an optical path length of the first light ray obtained after the optical path folding is greater than an optical path length of the second light ray. Therefore, a distance (which may be referred to as a first virtual image distance) between the first position and an eyebox is greater than a distance (which may be referred to as a second virtual image distance) between the second position and the eyebox. It should be understood that a light ray corresponding to a virtual image with a large virtual image distance has a larger optical path length in the HUD system, and a light ray corresponding to a virtual image with a small virtual image distance has a smaller optical path length in the HUD system. In addition, an optical path length is an optical distance from the PGU to the second reflection assembly. For details, refer to an optical path length shown in FIG. 8b.

Further, optionally, image information carried by the first light ray may be the same as image information carried by the second light ray, that is, the first virtual image is the same as the second virtual image. In this way, same virtual images can be formed at two different positions, so that a visual effect of dynamic zooming can be generated. For example, for a dynamic navigation pointer arrow extending forward, when a virtual image of this dynamic arrow enters a long-focus optical path (an optical path that forms the first virtual image may be referred to as a long-focus optical path), it is equivalent to that the arrow goes straight from a second position at a short-focus location to a first position in the long-focus optical path. For a driver, a visual perception may be the arrow extending from near to far, creating a stereoscopic sense of space in the front and rear on entire display. This can generate a visual effect similar to dynamic zooming.

Alternatively, the first light ray carries navigation image information, and the second light ray carries meter image information. In this way, navigation information may be presented at the first position, and meter information may be presented at the second position. In other words, the meter information is presented at the second position that is closer to the driver, and the navigation information is presented at the first position that is farther from the driver.

The following separately describes functional components and structures shown in FIG. 4, so as to provide an example specific implementation solution. For ease of description, no identifier is provided for the PGU, the first reflection assembly, and the second reflection assembly below.

### I. PGU

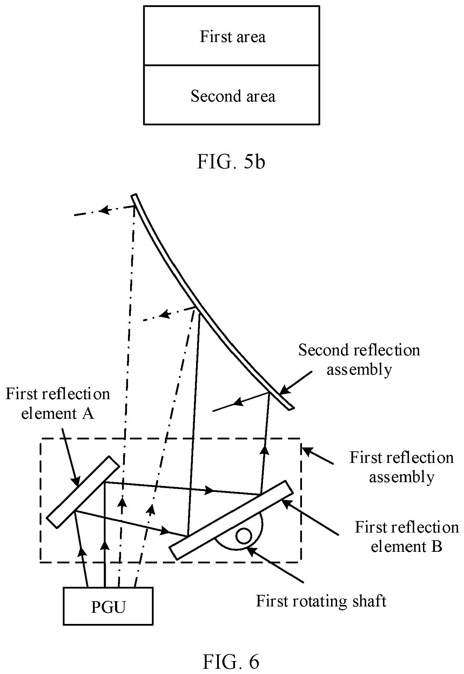

In a possible implementation, the PGU includes a display, and the display may be divided into a first area and a second area; the first area of the display is configured to emit the first light ray; and the second area of the display is configured to emit the second light ray. Refer to FIG. 5a. The display may be divided into two parts: A left part is the first area, and a right part is the second area. Refer to FIG. 5b. The display may also be divided into two parts: An upper part is the first area, and a lower part is the second area. It may also be understood that the display may be divided into a short-focus part and a long-focus part. The long-focus part is configured to emit a first light ray that forms a long-focus virtual image (that is, the first virtual image), and the short-focus part is configured to emit a second light ray that forms a short-focus virtual image (that is, the second virtual image).

It should be understood that any PGU structure that can emit the first light ray to the first reflection assembly and emit the second light ray to the second reflection assembly is feasible. This application sets no limitation thereto.

In a possible implementation, the PGU may be an LBS, a liquid crystal display (liquid crystal display, LCD), a digital micromirror display (digital micromirror display, DMD), or liquid crystal on silicon (liquid crystal on silicon, LCoS). Using the LBS as the PGU helps implement a large field of view and a large virtual image distance of the HUD system.

It should be noted that the first virtual image and the second virtual image may be implemented by using one PGU, and this indicates that object planes of the first virtual image and the second virtual image are on a same plane.

### II. First reflection assembly

In a possible implementation, the first reflection assembly includes N first reflection elements, and N is a positive integer. Further, optionally, the first reflection element may be a first planar reflector; or the first reflection element is a first curved-surface reflector.

The following describes cases based on different values of N.

Case 1: The first reflection assembly includes one first reflection element, that is, N is equal to 1.

In a possible implementation, a first reflection element nearest to the PGU is configured to receive the first light ray from the PGU and reflect the first light ray to the second reflection assembly. Based on case 1, the first reflection element is the first reflection element nearest to the PGU, and is also a first reflection element nearest to the second reflection assembly. It may also be understood that the first reflection assembly may include one first reflection element, and the first reflection element is configured to receive the first light ray from the PGU, and reflect the first light ray to the second reflection assembly. By using the first reflection element, the optical path of the first light ray can be folded once.

Further, optionally, a first rotating shaft may be further disposed on the first reflection element. By rotating the first rotating shaft, a position of the first virtual image in a direction perpendicular to the first virtual image distance can be adjusted. For details, refer to FIG. 6.

Case 2: The first reflection assembly includes at least two first reflection elements, and N is greater than 1.

In a possible implementation, a first reflection element nearest to the PGU is configured to receive the first light ray from the PGU, and reflect the first light ray to a first reflection element disposed opposite to the first reflection element nearest to the PGU; and a first reflection element nearest to the second reflection assembly is configured to reflect the first light ray obtained after the optical path folding to the second reflection assembly.

FIG. 6 is a schematic diagram of a structure of a first reflection assembly illustrated as an example according to this application. The first reflection assembly may include a first reflection element A and a first reflection element B. The first reflection element A is nearest to the PGU, and the first reflection element B is nearest to the second reflection assembly. A reflective surface of the first reflection element A is disposed opposite to a reflective surface of the first reflection element B. The first reflection element A is configured to receive the first light ray from the PGU, and reflect the first light ray to the first reflection element B. The first reflection element B is configured to reflect the first light ray obtained after the optical path folding to the second reflection assembly. By using the first reflection element A and the first reflection element B, the optical path of the first light ray can be folded twice.

Further, optionally, the first reflection element nearest to the second reflection assembly further includes a first rotating shaft, which is configured to adjust a position of the first virtual image in a direction perpendicular to the first virtual image distance.

With reference to FIG. 6, the first rotating shaft may be further disposed on the first reflection element B. By rotating the first rotating shaft, the position of the first virtual image in the direction perpendicular to the first virtual image distance can be adjusted. It should be understood that the first rotating shaft may be alternatively disposed on the first reflection element A; or the first rotating shaft is disposed on both the first reflection element A and the first reflection element B.

### III. Second reflection assembly

In a possible implementation, the second reflection assembly includes M second reflection elements, and M is a positive integer. Further, optionally, the second reflection assembly may be a second curved-surface reflector.

The following describes cases based on different values of M.

Case 1: The second reflection assembly includes one second reflection element, that is, M is equal to 1.

In a possible implementation, a second reflection element nearest to the first reflection assembly is configured to receive the first light ray obtained after the optical path folding from the first reflection assembly, and reflect the first light ray obtained after the optical path folding to the windshield. Based on case 1, the second reflection element is the second reflection element nearest to the first reflection assembly, and is also a second reflection element nearest to the windshield.

Further, optionally, the second reflection element nearest to the first reflection assembly is further configured to receive the second light ray from the PGU, and reflect the second light ray to the windshield.

In a possible implementation, the second reflection element further includes a second rotating shaft, which is configured to adjust the position of the first virtual image in the direction perpendicular to the first virtual image distance, and/or is configured to adjust a position of the second virtual image in a direction perpendicular to the second virtual image distance.

Case 2: The second reflection assembly includes at least two second reflection elements, that is, M is greater than 1.

In a possible implementation, a second reflection element nearest to the first reflection assembly is configured to receive the first light ray obtained after the optical path folding from the first reflection assembly, and reflect the first light ray obtained after the optical path folding to a second reflection element disposed opposite to the second reflection element nearest to the first reflection assembly; and a second reflection element nearest to the windshield is configured to reflect the first light ray obtained after the optical path folding to the windshield.

Further, optionally, the second reflection element nearest to the first reflection assembly is further configured to receive the second light ray from the PGU, and reflect the second light ray to the second reflection element disposed opposite to the second reflection element nearest to the first reflection assembly; and the second reflection element nearest to the windshield is further configured to reflect the second light ray to the windshield.

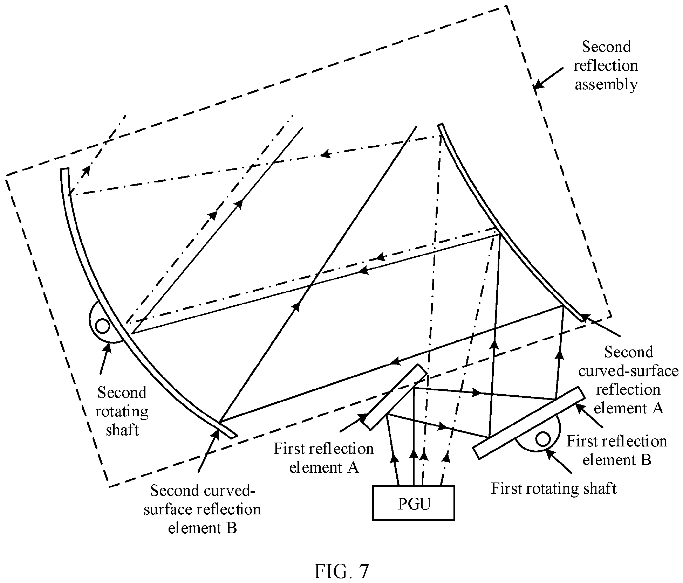

FIG. 7 is a schematic diagram of a structure of a second reflection assembly according to this application. The second reflection assembly may include a second curved-surface reflection element A and a second curved-surface reflection element B. The second curved-surface reflection element A is nearest to the first reflection assembly, and the second reflection element B is nearest to the windshield. With reference to FIG. 6, the second curved-surface reflection element A is nearest to the first reflection element B, and the second curved-surface reflection element B is nearest to the windshield. The second curved-surface reflection element A is configured to receive the first light ray obtained after the optical path folding from the first reflection assembly and the second light ray from the PGU, and separately reflect the first light ray obtained after the optical path folding and the second light ray to the second curved-surface reflection element B. The second curved-surface reflection element B is configured to separately reflect the first light ray obtained after the optical path folding and the second light ray to the windshield.

Further, optionally, the second reflection element nearest to the windshield further includes a second rotating shaft, which is configured to adjust the position of the first virtual image in the direction perpendicular to the first virtual image distance, and/or is configured to adjust a position of the second virtual image in a direction perpendicular to the second virtual image distance.

With reference to FIG. 7, the second rotating shaft is disposed on the second curved-surface reflection element B. By rotating the second rotating shaft, the position of the first virtual image in the direction perpendicular to the first virtual image distance can be adjusted, and/or the position of the second virtual image in the direction perpendicular to the second virtual image distance can be adjusted. It should be understood that the second rotating shaft may be alternatively disposed on the second curved-surface reflection element A; or the second rotating shaft is disposed on both the second curved-surface reflection element A and the second curved-surface reflection element B.

It should be noted that the second reflection assembly may further converge or diverge a received light ray, so that an image corresponding to the first light ray emitted by the PGU and an image corresponding to the second light ray emitted by the PGU may be separately zoomed in.

Based on the foregoing content, the following provides three possible specific implementations of the foregoing HUD system with reference to specific hardware structures, to facilitate further understanding of the foregoing HUD system and an implementation process in which the HUD system is used to display virtual images at different virtual image distances.

In the following descriptions, for example, the first reflection element is a first planar reflector, the second reflection element is a second curved-surface reflector, and the PGU is an LBS.

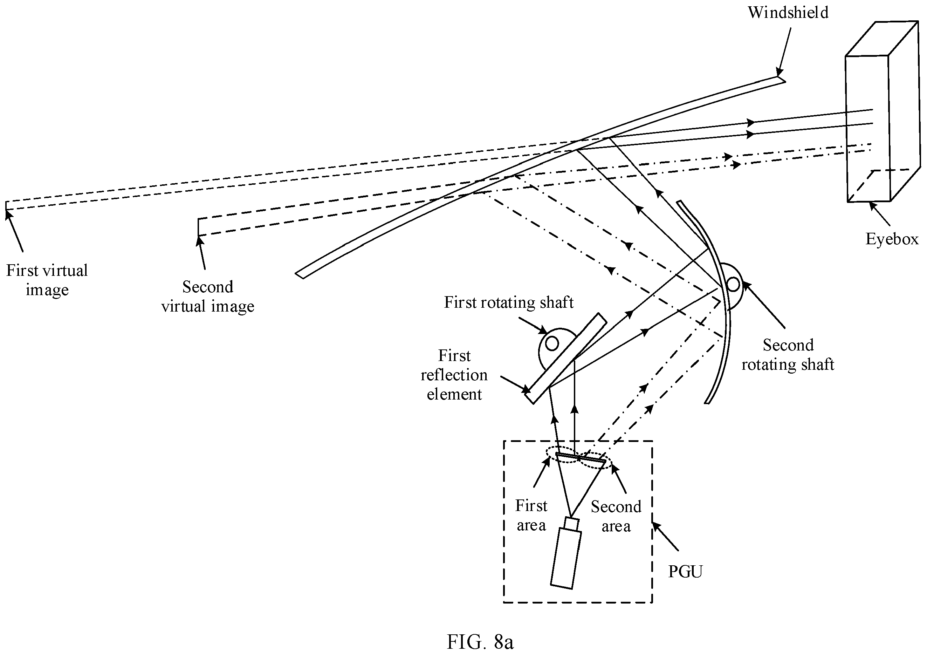

FIG. 8a is a schematic diagram of a structure of another HUD system according to this application. The HUD system may include an LBS, a first planar reflector, and a second curved-surface reflector. The LBS may include a display. The display of the LBS includes a first area and a second area. The first area is configured to emit a first light ray to the first planar reflector, and the second area is configured to emit a second light ray to the second curved-surface reflector. The first planar reflector reflects the first light ray from the LBS to the second curved-surface reflector, that is, implements optical path folding on the first light ray from the LBS. The second curved-surface reflector is configured to reflect a first light ray obtained after the optical path folding from the first planar reflector to a windshield, and also reflect the second light ray from the LBS to the windshield. The first light ray obtained after the optical path folding forms a first virtual image at a first position by using the windshield, and the second light ray forms a second virtual image at a second position by using the windshield. Further, optionally, a first rotating shaft is disposed on the first reflection element, and a second rotating shaft is disposed on the second curved-surface reflection element.

FIG. 8b is a schematic diagram of a structure of still another HUD system according to this application. The HUD system may include an LBS, a first planar reflector A, a first planar reflector B, a second curved-surface reflector A, and a second curved-surface reflector B. For the LBS, refer to the foregoing descriptions of FIG. 8a. Details are not described herein again. The first planar reflector A is configured to reflect a first light ray from the LBS to the first planar reflector B. The first planar reflector B is configured to reflect the first light ray from the first planar reflector A to the second curved-surface reflector A. In other words, the first planar reflector A and the first planar reflector B implement optical path folding on the first light ray from the LBS. The second curved-surface reflector A is configured to separately propagate a received first light ray obtained after the optical path folding and the received second light ray to the second curved-surface reflector B. The second curved-surface reflector B is configured to separately propagate the received first light ray obtained after the optical path folding and the received second light ray to a windshield. The first light ray obtained after the optical path folding forms a first virtual image at a first position by using the windshield, and the second light ray forms a second virtual image at a second position by using the windshield. An optical distance A, an optical distance B, and an optical distance C are optical path lengths of the first light ray obtained after the optical path folding. An optical distance D represents an optical path length of the second light ray.

Further, optionally, a first rotating shaft is disposed on the first reflection element B, and a second rotating shaft is disposed on the second curved-surface reflection element B.

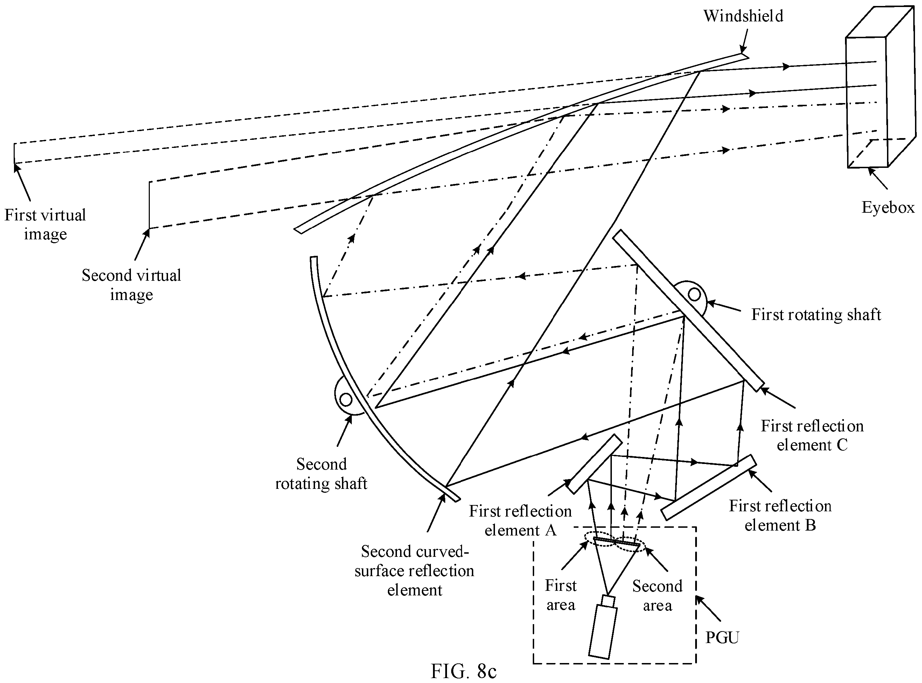

FIG. 8c is a schematic diagram of a structure of still another HUD system according to this application. The HUD system may include an LBS, a first planar reflector A, a first planar reflector B, a first planar reflector C, and a second curved-surface reflector. For the LBS, refer to the foregoing descriptions of FIG. 8a. Details are not described herein again. The first planar reflector A is configured to reflect a first light ray from the LBS to the first planar reflector B. The first planar reflector B is configured to reflect the first light ray from the first planar reflector A to the first planar reflector C. The first planar reflector C is configured to transmit the first light ray from the first planar reflector B to the second curved-surface reflector. In other words, the first planar reflector A, the first planar reflector B, and the first planar reflector C implement optical path folding on the first light ray from the LBS. The second curved-surface reflector is configured to separately propagate a received first light ray obtained after the optical path folding and the received second light ray to a windshield. The first light ray obtained after the optical path folding forms a first virtual image at a first position by using the windshield, and the second light ray forms a second virtual image at a second position by using the windshield. Further, optionally, a first rotating shaft is disposed on the first reflection element C, and a second rotating shaft is disposed on the second curved-surface reflection element.

Based on the structures and function principles of the HUD systems described above, this application may further provide a vehicle. The vehicle may include the foregoing HUD system and a windshield. The windshield is configured to reflect the first light ray from the HUD system to an eyebox to form a first image corresponding to the first virtual image, and reflect the second light ray from the HUD system to the eyebox to form a second image corresponding to the second virtual image, and the eyebox is an area in which driver's eyes are located.

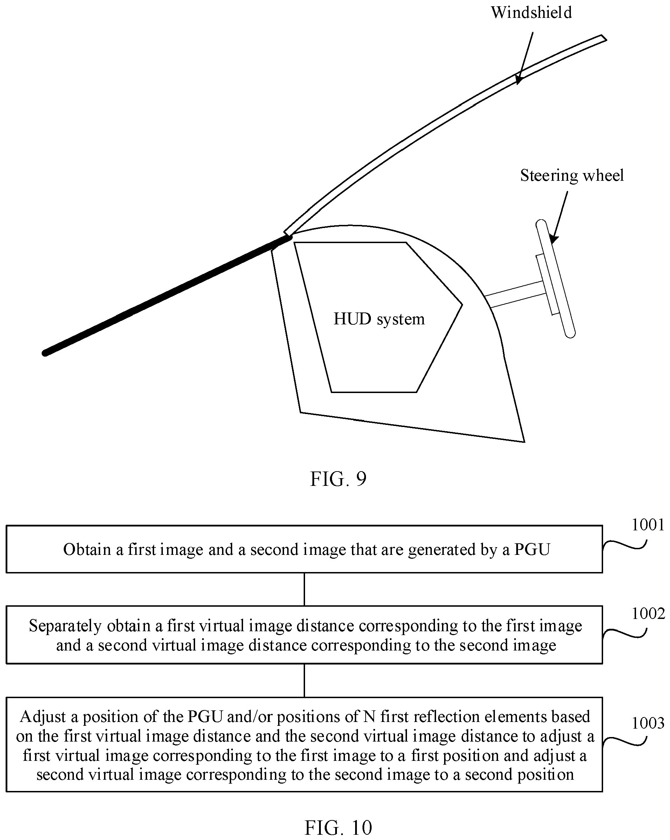

FIG. 9 is a simplified schematic diagram of a partial structure of a vehicle according to this application. The vehicle may include a HUD system and a windshield. The HUD system may be located below a steering wheel, for example, may be located in a console below the steering wheel. The HUD system may be the HUD system in any one of the foregoing embodiments.

It should be understood that a hardware structure shown in FIG. 9 is merely an example. A vehicle to which this application applies may have more or fewer components than those of the vehicle shown in FIG. 9, may combine two or more components, or may have different component configurations. For example, the vehicle may further include other devices, such as a steering wheel, a processor, a memory, a wireless communication apparatus, a sensor, and the like.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In a possible implementation, the windshield includes a wedge-shaped windshield or a planar windshield. This application sets no limitation thereto.

Based on the foregoing content and a same concept, this application provides a virtual-image position adjustment method. For details, refer to descriptions of FIG. 10. The virtual-image position adjustment method may be applied to the HUD system in any one of the foregoing embodiments. As shown in FIG. 10, the virtual-image position adjustment method includes the following steps.

Step 1001: Obtain a first image and a second image that are generated by a PGU.

Herein, the first image is an image formed by a first light ray emitted by the PGU, and the second image is an image formed by a second light ray emitted by the PGU. For the first light ray and the second light ray that are emitted by the PGU, refer to the foregoing related descriptions. Details are not described herein again.

Step 1002: Separately obtain a first virtual image distance corresponding to the first image and a second virtual image distance corresponding to the second image.

In a possible implementation, a virtual image distance of a first virtual image corresponding to the first image is the first virtual image distance, and a virtual image distance of a second virtual image corresponding to the second image is the second virtual image distance. Herein, the first virtual image distance and the second virtual image distance may be preset.

Step 1003: Adjust a position of the PGU and/or positions of N first reflection elements based on the first virtual image distance and the second virtual image distance to adjust the first virtual image corresponding to the first image to a first position and adjust the second virtual image corresponding to the second image to a second position.

Herein, the first reflection element may be a first planar reflector. Further, optionally, at least one of the N first reflection assemblies includes a first rotating shaft; and the first rotating shaft of the first reflection element may be adjusted to change a position of the first virtual image in a direction perpendicular to the first virtual image distance.

It may be learned from step 1001 to step 1003 that, by adjusting the position of the PGU and/or the positions of the N first reflection elements, the first virtual image and the second virtual image can be formed at two different positions.

In embodiments of this application, if there is no special description or logic conflict, terms and/or descriptions in different embodiments are consistent and may be mutually referenced, and technical features in different embodiments may be combined to form a new embodiment based on an internal logical relationship of the technical features.

In this application, "perpendicular" does not mean absolute perpendicularity, and a specific engineering error may be allowed. "And/Or" describes an association relationship between associated objects, and indicates that three types of relationships may exist. For example, "A and/or B" may represent the following three cases: Only A exists, both A and B exist, and only B exists. A and B may be singular or plural. In text descriptions of this application, the character "/" generally represents an "or" relationship between associated objects. In a formula of this application, the character "/" indicates a "division" relationship between associated objects. In addition, in this application, the term "example" is used to represent giving an example, an illustration, or a description. Any embodiment or design scheme described as "example" in this application should not be explained as being more preferred or having more advantages than another embodiment or design scheme. Alternatively, this may be understood as follows: Use of the word "example" is intended to present a concept in a specific manner, and does not limit this application.

It may be understood that, in this application, various numeric numbers are distinguished merely for ease of description and are not used to limit the scope of the embodiments of this application. The serial numbers of the foregoing processes do not mean execution sequences. The execution sequences of the processes should be determined according to functions and internal logic of the processes. The terms "first", "second", and the like are used to distinguish between similar objects without having to describe a specific order or sequence. In addition, the terms "including" and "having" and any of their variants are intended to cover non-exclusive inclusions, for example, including a series of steps or units. A method, system, product, or device is not necessarily limited to those steps or units clearly listed, and may include other steps or units that are not clearly listed or are inherent to the process, method, product, or device.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that cover the scope of this application.

Clearly, a person skilled in the art can make various modifications and variations to this application without departing from the spirit and scope of the present invention. In this way, this application is intended to cover these modifications and variations in embodiments of this application, provided that they fall within the scope of the claims of this application and their equivalent technologies.

## Claims

1. A head-up display HUD system, comprising a picture generation unit PGU, a first reflection assembly, and a second reflection assembly, wherein
the PGU is configured to emit a first light ray to the first reflection assembly, and emit a second light ray to the second reflection assembly;
the first reflection assembly is configured to perform optical path folding on the received first light ray, and reflect a first light ray obtained after the optical path folding to the second reflection assembly; and
the second reflection assembly is configured to separately reflect the received first light ray obtained after the optical path folding and the received second light ray to a windshield, wherein the first light ray obtained after the optical path folding forms a first virtual image at a first position by using the windshield, and the second light ray forms a second virtual image at a second position by using the windshield.

2. The system according to claim 1, wherein an optical path length of the first light ray obtained after the optical path folding is greater than an optical path length of the second light ray.

3. The system according to claim 1, wherein the first reflection assembly comprises N first reflection elements, and N is a positive integer; and
a first reflection element nearest to the PGU is configured to receive the first light ray from the PGU, and reflect the first light ray to a first reflection element disposed opposite to the first reflection element nearest to the PGU; and a first reflection element nearest to the second reflection assembly is configured to reflect the first light ray obtained after the optical path folding to the second reflection assembly; or
a first reflection element nearest to the PGU is configured to receive the first light ray from the PGU and reflect the first light ray to the second reflection assembly.

4. The system according to claim 3, wherein the first reflection element comprises a first planar reflector.

5. The system according to any one of claims 1 to 4, wherein the second reflection assembly comprises M second reflection elements, and M is a positive integer; and
a second reflection element nearest to the first reflection assembly is configured to receive the first light ray obtained after the optical path folding from the first reflection assembly, and reflect the first light ray obtained after the optical path folding to a second reflection element disposed opposite to the second reflection element nearest to the first reflection assembly; and a second reflection element nearest to the windshield is configured to reflect the first light ray obtained after the optical path folding to the windshield; or
a second reflection element nearest to the first reflection assembly is configured to receive the first light ray obtained after the optical path folding from the first reflection assembly, and reflect the first light ray obtained after the optical path folding to the windshield.

6. The system according to any one of claims 1 to 5, wherein the second reflection assembly comprises M second reflection elements, and M is a positive integer; and
the second reflection element nearest to the first reflection assembly is further configured to receive the second light ray from the PGU, and reflect the second light ray to the second reflection element disposed opposite to the second reflection element nearest to the first reflection assembly; and the second reflection element nearest to the windshield is further configured to reflect the second light ray to the windshield; or
the second reflection element nearest to the first reflection assembly is further configured to receive the second light ray from the PGU, and reflect the second light ray to the windshield.

7. The system according to claim 5 or 6, wherein the second reflection element comprises a second curved-surface reflector.

8. The system according to any one of claims 1 to 7, wherein the PGU comprises a display, and the display comprises a first area and a second area;
the first area of the display is configured to emit the first light ray; and
the second area of the display is configured to emit the second light ray.

9. The system according to any one of claims 1 to 8, wherein image information carried by the first light ray is the same as image information carried by the second light ray.

10. The system according to any one of claims 1 to 8, wherein the first light ray carries navigation image information, and the second light ray carries meter image information.

11. The system according to any one of claims 1 to 10, wherein the PGU comprises a laser beam scanner LBS.

12. The system according to any one of claims 1 to 11, wherein the first reflection element nearest to the second reflection assembly further comprises a first rotating shaft; and
the first rotating shaft is configured to adjust a position of the first virtual image in a direction perpendicular to a first virtual image distance.

13. The system according to any one of claims 1 to 12, wherein the second reflection element nearest to the windshield further comprises a second rotating shaft; and
the second rotating shaft is configured to adjust the position of the first virtual image in the direction perpendicular to the first virtual image distance, and/or is configured to adjust a position of the second virtual image in a direction perpendicular to a second virtual image distance.

14. A vehicle, comprising the HUD system according to any one of claims 1 to 13 and a windshield, wherein the windshield is configured to reflect the first light ray obtained after the optical path folding from the HUD system to an eyebox to form a first image corresponding to the first virtual image, and reflect the second light ray from the HUD system to the eyebox to form a second image corresponding to the second virtual image, and the eyebox is an area in which driver's eyes are located.

15. A virtual-image position adjustment method, applied to a head-up display HUD system, wherein the HUD system comprises a picture generation unit PGU and N first reflection elements, and N is a positive integer; and the method comprises:
obtaining a first image and a second image that are generated by the PGU;
separately obtaining a first virtual image distance corresponding to the first image and a second virtual image distance corresponding to the second image; and
adjusting a position of the PGU and/or positions of the N first reflection elements based on the first virtual image distance and the second virtual image distance to adjust a first virtual image corresponding to the first image to a first position and adjust a second virtual image corresponding to the second image to a second position.

16. The method according to claim 15, wherein at least one of the N first reflection assemblies comprises a first rotating shaft; and
the method further comprises:
adjusting the first rotating shaft of the first reflection element to change a position of the first virtual image in a direction perpendicular to the first virtual image distance.

17. The method according to claim 15 or 16, wherein the first reflection element comprises a first planar reflector.
